# EUROPEAN PATENT APPLICATION

(11) **EP 4 635 706 A1**
(43) Date of publication of application: **22.10.2025**
(21) Application number: 25167349.7
(22) Date of filing: 31.03.2025
(51) Int. Cl.: B29B 17/02, B29B 17/04

(54) **SYSTEM FOR THE REGENERATION AND/OR ADVANCED RECYCLING OF PACKAGINGS AS WELL AS CORRESPONDNIG PACKAGINGS**

(30) Priority: 15.04.2024 IT 202400008422
(71) Applicant: Rossi, Gabriele, 16156 Genova (GE) (IT)
(72) Inventor: Rossi, Gabriele, 16156 Genova (GE) (IT); Rossi, Luca, 16156 Genova (GE) (IT)
(74) Representative: Bottino, Giovanni

(57) **Abstract**

The invention relates to a system for the regeneration and/or advanced recycling of packagings of the type comprising an elongated neck like a bottle and a cap anchored to the neck of the packaging by means of a sealing ring held in place and made efficient by a pair of longitudinally spaced annular projections. The system comprises a conveying unit for the packages to be treated towards a separation unit for separating the cap from the packaging and a collecting unit for the caps separated from the packaging. The separation unit for the cap comprises at least one blade, preferably two opposing blades, for cutting the sealing ring, said blade(s) being configured to cut the sealing ring at a predefined position of the neck of the packaging, said predefined position being identified by oriented guide notches provided on the packagings to be treated on at least one of the two annular projections and generally both.

The invention also relates to a packaging and a deposit/collection unit particularly suitable for use in the aforesaid system.

## Description

The present invention relates to the field of recycling/reuse of packagings, in particular for liquids in the most general sense of the term, which includes not only the beverage and spirits sector, but also that of food and mineral oils, detergents, fluid cosmetics, solvents, cleansers and other chemical products.

Currently there is a fairly narrow range of materials with which to produce containers for liquids on an industrial scale, each of which is more or less specific to a particular type of application and/or content and with a different environmental impact.

An indissoluble and technically very important part of this type of packaging is the closures, commonly called caps, in many applications rightly classified as special because of a whole range of specifications and advanced performance characteristics that they must have.

Given the state of the art of industry and regulations in terms of environmental sustainability, it is currently imperative to start considering a new concept of packagings capable of offering the best performance and competitiveness with the broadest protection of the environment and resource saving, naturally having all the requirements of practicality, safety and efficiency necessary to perform their function.

Among the materials commonly used for packagings, that with the lowest direct environmental impact, but only in chemical terms, is obviously glass, a material that is absolutely inert, heavy and therefore completely similar to stone. On the other hand, the negative record is held by polylaminates, which also contain adhesives and the largest number of component materials that are impossible to separate, with different degradation characteristics and environmental impact that all add up together.

Substances such as tin and aluminium, when in the form of small particles that can bind with organic substances, pose considerable health risks.

With respect to the recycling of materials in terms of energy and water use, polluting potential of the process and costs of the necessary equipment, the positive theoretical record is held by some types of plastic, first of all PET (the type that can be worked by blowing), followed by PP and PE, since at an energy level they melt at much lower temperatures than other materials and likewise they lose nothing or almost nothing of their characteristics for many cycles of remelting, while for example paper and cardboard require large amounts of water, energy and use of chemical products, just as much glass in terms of energy.

One of the limitations in the recycling of plastic is that there are many different types that are almost always incompatible with each other and many packages are composed of at least two, plus those that form the labels, which are currently not always easy to separate.

Only PET and PP/PE are easy to separate once shredded because they have a density greater than and less than 1 respectively, so they tend to sink/float in water.

Regarding the labels, which in PET bottles typically consist of a PP film in a different grade than that of the cap, it is not known if there is currently a valid recycling system.

Certainly the most difficult, if not impossible, packages from which to recycle the materials, due to a matter of major complications in the separation, are obviously still the polylaminates that can at most be transformed into by-products but so far with little possibility of use.

The reuse or the regeneration of the package brought to new and reintroduced into the commercial distribution cycle represents a good solution in terms of environmental sustainability, however it greatly restricts the choice of materials, which must have all those characteristics that most limit the possibilities of damage and speed of deterioration of the good, as well as obviously facilitating the lower economic burden in terms of logistics/transport (weight) and, at the end of the various and greater possible reuse cycles, they can also be easily recycled and at low cost.

Although polylaminates such as Tetra Pack are packages that in terms of performance of use certainly rank highly in terms of preserving the contents, and in terms of practicality they are light and moreover can be reduced in volume until they are conformed, here too they are at the bottom of the ranking due to obvious problems of re-filling and re-closing, as well as form stability.

Even glass, which in earlier times was normally reused, nowadays, due to industrial volume issues, has some unfavourable drawbacks such as delicacy/frangibility and weight in vacuum transport. Broken glass is also very dangerous, both in small and large quantities.

Aluminium in bottle form with a certain wall thickness also has, albeit to a lesser extent, the inconvenience of vacuum weight, and although it is generically unbreakable, it is subject to significant deterioration due to impact dents and scratches, which is a major drawback.

As far as aluminium is concerned, therefore, it seems to be more advantageous to recycle the material, typically in the ideal form of ring-pull cans, in the state of the art of packaging use, not least because these cannot be contemplated for reuse, where they are suitable and employed as we know for use almost exclusively in the beverage sector.

This characteristic of easy mechanical deterioration is further amplified in tinplate, in addition to the ease at which it oxidises at welding points, and everywhere else as the protective layer wears off.

A tinplate can dispersed in the environment breaks down within a few years, thus spilling and dispersing the residues of the contents, where these generally include a wide range of harmful chemicals: a paradox in terms of safety/prevention, but there are not many alternatives of materials suitable for storing very aggressive liquid substances for medium-long periods.

As for PP and PE plastic materials, which are mainly used to produce bottles and components for cosmetics as well as for food use, at present, uncertain convenience cannot be overlooked in view of a possible reuse system versus recycling. However, the high frequency and non-conformity of these packages suggests that at most they end up in incinerators instead of being recycled. Yet in general, these materials are very well recyclable: the problem lies essentially in what they normally contain and for what and how they are designed.

Other plastic materials such as PC also present significant difficulties in terms of recycling, but last longer without losing the slightest mechanical and aesthetic characteristics. At best, they are less unbreakable because they break more easily if they are subjected to strong shocks, even resulting in dangerous shards since they are hard, sharp and pointed.

In addition to the whole series of technical/attitudinal evaluations to define the greatest predisposition, convenience, efficiency and versatility in the recovery of a package for reuse, the visual/attractive aspect of marketing cannot be neglected. In this respect non-transparent materials fall significantly in the ranking, while those that can be either one or the other go up, where this alternative within a reuse system does not represent a particular selection problem resulting in a parameter that is quite easy to manage depending on the separation, while currently for the recycling of materials it is absolutely not the case.

One object of the present invention is to provide a system for the regeneration and/or advanced recycling of packagings, in particular for liquids.

A further object of the present invention is to provide a packaging and a deposit/collecting device particularly suitable for use in said system.

The invention achieves the object with a system for the regeneration and/or advanced recycling of packagings of the type comprising an elongated bottle neck and a cap anchored to the neck of the packaging by means of a sealing ring held in place and made perfectly efficient by a pair of longitudinally spaced annular projections. The system comprises a conveying unit for the packages to be treated towards a separation unit for separating the cap from the packaging and a collecting unit for the caps separated from the packaging. The separation unit for the cap comprises at least one blade, preferably two opposing blades, for cutting the sealing ring. Said one or more blades are configured to cut the sealing ring at a predefined position of the neck of the packaging identified by oriented guide notches provided on the packagings to be treated on at least one of the two annular projections.

The positioning of the oriented guide notches at the blade(s) can be facilitated by the presence of guide elements.

In one embodiment, the guide elements comprise centring means cooperating with one, preferably two, opposing longitudinal flattenings provided on a label element associated or associable with the package.

Thanks to these measures, it is possible to separate the material that forms the cap and the sealing ring, for example PP/PE, from the material that forms the bottle, for example PET, without resorting to grinding the packaging. This makes it possible not only to optimize the recycling of disposable packagings, but also to be able to regenerate packages with characteristics compatible with such a treatment.

The system may provide for a unit for separating the labels from the packagings if said labels are of the non-regenerable type. This unit can be present both in the case of systems dedicated to recycling only and in mixed systems capable of also regenerating packages.

In case of packaging regeneration, the label is typically not removed but regenerated and reused. For this reason, the system may provide for the use of one or more label processing units. This treatment may comprise the application of opaque colour on the labels of the packagings to be regenerated and the printing of new indications on the label of the regenerated package as well as the scraping off of the print on the label so as to eliminate contamination from the label of the end-of-life packages to be recycled.

A dynamic washing and palletizing unit for regenerated packagings completes the system.

In one embodiment, there is a packaging pre-selection unit capable of recognising the family of substances contained therein in the label by means of the background colour, so as to group the packagings in such a way as to promote the objective of ensuring that the regenerated packagings are always used with the same substances.

According to another aspect, the invention relates to a deposit/collection unit of the packagings to be treated particularly suitable for use in the system according to the invention. To this end, the collection unit may comprise sensors adapted to detect the type and identity of the packaging to be collected on the basis of the information present on a label of the packaging so as to prevent the collection of packagings not compatible with the system or with a specific product line of the system.

In one embodiment, the deposit/collection unit comprises a specially modulated opening for inserting the package and a pneumatic mechanism adapted to convey the package to a collection container if the package is recognised as compatible with the system or to expel the package if it is not recognised as compatible with the system.

In one embodiment, the deposit/collection unit comprises a control/enabling or activation unit interfaced to the sensors and configured to identify the user who introduces the package into the mouth by reading a barcode, QR code, or validation through OTP, pin, smartcard, smartphone or similar authentication systems so as to assign the user a credit whenever they place compatible package in the collection unit.

In an advantageous configuration, the deposit/collection unit comprises an input element provided with:
(A) an opening for the insertion, by a user, of the packaging to be collected;
(B) sensors capable of reading the information on the label of the package introduced into the opening in order to identify packagings compatible with the collection unit;
(C) a duct adapted to transport the packagings from the input element to a collection container;
(D) pneumatic means adapted to push compatible packagings from the opening of the input element towards the collection container through the duct. Similar pneumatic means can also provide for the expulsion of packagings not compatible with the system.

The collection unit may advantageously comprise a press device adapted to crush packagings recognised as recyclable but not regenerable during transit from the input element to the collection container.

The duct can assume the configuration of a flexible tube of which the input element represents an extension provided with a lateral opening of such dimensions and shape as to contain a packaging compatible with the collection unit before its transit in the flexible tube. In one embodiment particularly suitable for installation in highfrequency environments, the flexible tube is left exposed for direct fixing to support structures of the collection unit.

The invention also relates to packaging structured and configured to be particularly suitable for regeneration and consequently for reuse, in particular in the context of an overall system known as circular, having particular characteristics as represented therein, integral and interconnected parts of the present invention.

The packaging comprises a body having at one end a neck leading to a threaded opening mouth on which a cap is screwed or screwable. The cap is anchored to the neck of the packaging by means of a sealing ring provided with an internal coupling held in place and made efficient by a pair of longitudinally spaced annular projections provided with oriented guide notches functioning for the intervention of one or more blades for cutting/separating the ring from the neck of the packaging when regenerating or recycling the packaging.

In one improvement, there is a longitudinal notch on the neck between the two annular projections on the oriented guide notches.

In one embodiment, the packaging body is divided into a label part or zone and an exposed part or zone with the exposed part having structural characteristics different from the label part or zone, in particular greater thicknesses than the thicknesses of the label part.

When the packaging is in an upright position, the exposed portion is located in the upper part of the packaging below the neck while the label portion is located in the lower part of the packaging above the bottom of the packaging.

According to an improvement, the exposed part has the characteristic of having, in addition to a greater thickness than the standard, also a specific particularly efficient bulging profile so as to give overall a strength that is significantly greater than the average of the type of packages in question, and therefore compared to the lower part of the same that remains compliant with the standard, that is, compared to the part or label zone of the container package, when the regenerable cover/ label element is provided.

In one embodiment, a cover/label element is superimposed on the label part or zone of the packaging body, which has different structural and product characteristics from the label body, in particular stronger and more robust, so as to add to and equalize the different and stronger strength of the exposed part.

This makes it possible to make very sturdy packagings particularly suitable for reuse, for example by making the body and neck in PET and the label element and cap in PP or PE.

The label element advantageously follows the shape of the lower part of the packaging so that it is fitted in a shirt-like manner on the body of the packaging starting from the bottom until an opening provided on the label element engages on a projection provided on the bottom of the package or more precisely the main container. The projection has a bead adapted to be melted or riveted to the applied label element, in such a way as to prevent separation of the label element itself from the body of the packaging without said projection or said bead being removed or tampered with.

The label element may comprise one, preferably two, opposing longitudinal flattenings that act as centring elements for the correct positioning of the packaging being deposited, until regeneration towards the next cycle of reuse or final recycling of the packaging material, that is, throughout the cycle of recovery processing for repeated instances.

In a particularly advantageous embodiment, the packaging has one, preferably two, longitudinal grooves adapted to receive a blade for cutting the label element without the blade coming into contact with the body of the packaging and to facilitate the operation of folding the packaging on itself when recycling the packaging

Further features and improvements are the object of the subclaims.

The features of the invention and the advantages derived therefrom will become more apparent from the following detailed description of the accompanying figures, wherein:
Fig. 1 shows the neck of a bottle with a tethered-type cap joined by means of a strap joined in piece to a sealing ring.
Fig. 2 shows the detail of the separation unit of the cap from the packaging in a system according to an embodiment of the invention
Fig. 3a shows the detail of the oriented guide notches provided on the retaining and planar support projections of the sealing ring.
Fig. 3b shows an improvement of the package of the previous figure in which longitudinal notches are further present on the neck of the packaging at the oriented guide notches.
Figs. 4 and 5 show block diagrams of a system according to an embodiment of the invention.
Fig. 6 shows the detail of the cap unscrewing unit in a system according to an embodiment of the invention.
Figs. 7-10 show the sequence of steps followed in a system according to the invention for removing a non-reusable label from a package;
Fig. 11 shows an example of collection unit that can be employed in a system according to the invention.
Fig. 12 shows the steps of inserting a packaging into the unit of the previous figure.
Fig. 13 shows in sequence the transit of the packaging from the opening to the recovery basket of the collection unit of the previous figures.
Fig. 14 shows a block diagram of a packagings collection unit according to an embodiment of the invention.
Fig. 15 shows a packagings collection unit according to another embodiment.
Figs. 16-21 show in sequence the operations of crushing a non-regenerable package in a collection unit according to the invention.
Figs. 22-25 show a collection unit according to another embodiment of the invention particularly suitable for use in high-attendance events.
Figs. 26-29 show some installations of the collection unit for high-attendance events of the previous figures,
Figs. 30-34 show some views of regenerable packages according to embodiments of the present invention.
Figs. 35-36 show how a regenerable label is assembled in the packages of the previous figures.
Fig. 37 shows end-of-life regenerable labels subject to pollutant removal.
Fig. 38 shows the shape of package with advanced recyclability characteristics according to an embodiment of the present invention.
Fig. 39 shows examples of packagings with advanced recyclability with indication of the preferential folding lines functioning for correct crushing for the purpose of limiting overall dimensions during collection/storage and transport.

The system according to the invention allows the reuse and/or advanced recycling of packagings, in particular containers provided with a neck such as bottles.

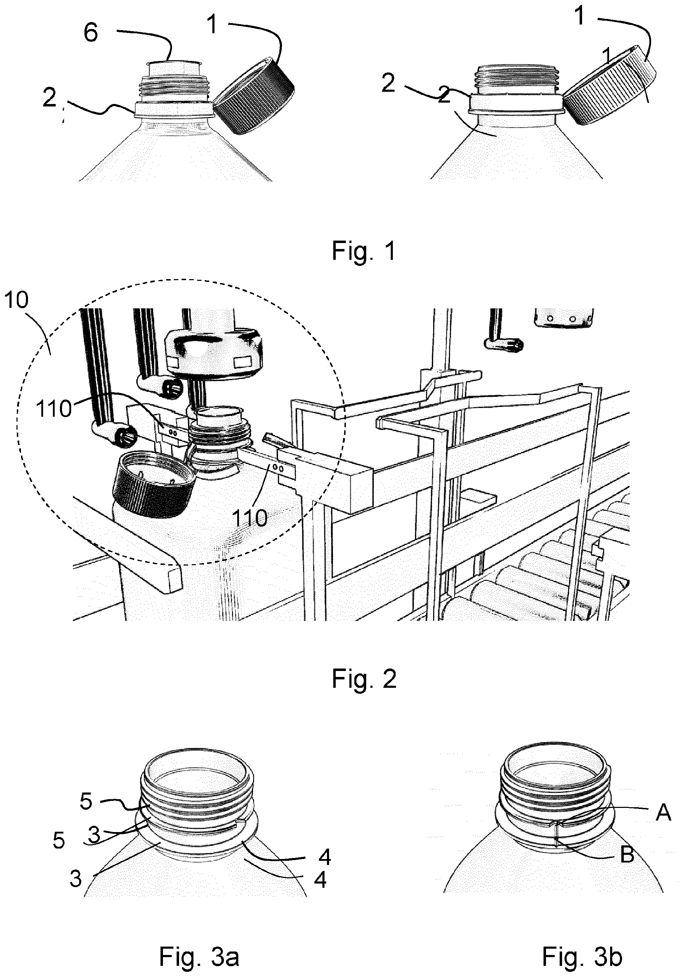

The first element that must be taken into account for the management of the recycling/reuse of a packaging concerns the cap 1 which is generally and conveniently in an advanced recovery logic, of the tethered type, that is, it remains anchored by means of a strap to a collar 2 (also called a sealing ring in the present description) fixed on the neck of the bottle and which, being connected to the cap, prevents it from being dispersed into the environment after use as shown in Fig. 1. Hence the need to separate the two elements, part of a single piece, for proper reuse/recycling of the packaging and, therefore, the possibility of applying a new cap with a breakable seal during repackaging/reuse.

To this end, the invention provides for conveying the packagings to be treated towards a cap separation unit (indicated in dashed lines with reference 10 in Fig. 2) which removes the collar 2 and, therefore, the cap 1 anchored to it or attached/connected which can thus be directed towards an underlying collection unit (not shown in the figure).

In the embodiment shown in Fig. 1, the cap separation unit 10 comprises a pair of opposing blades 110 which provide for etching the collar 2 in diametrically opposite positions. Cutting does not take place for any orientation of the packaging in the packaging dragging system, inside the separation unit 20, but only when the packaging assumes a well-defined position with respect to the blades 110.

This position is advantageously identified by the main template of the packaging that guides the positioning of the oriented guide notches -A-provided on the neck of the packagings to be treated on at least one of the two annular projections 3, 4 that provide for axially locking the collar 2 below the thread 5 as shown in Fig. 3a and with a radial abutment on the lower projection in order to discourage dislodging actions, highlighting unavoidable marks of sharp or pointed objects transferred to the seal ring, to which is added the function of breaking bridges during this type of manoeuvre.

In order for the separation unit 10 to operate correctly, it is advisable that the inner cylindrical part of the sealing ring 2 of the cap 1 has a height that exceeds the upper projection 3 of the neck and is in slight friction with it so as to prevent the cap from rotating by falling downwards during pouring, but above all to benefit from the contrasting action of the same upper projection 3 of the neck during the cutting/separation operations of the sealing ring 2 to prevent the cutting blade 110 from bending the ring 2 until it pushes it between the upper projection 3 and the lower projection 4, also called shoulder, ruining the bottle.

According to an embodiment, shown in Fig. 3b, at the oriented guide notches -A- there is a vertical notch -B- on the neck between the two annular projections 3, 4. This makes it possible to prevent someone from cutting the seal by having a sealing ring that does not contrast with the upper annular projection of the neck, but that passes under it if pushed towards the centre. Because of the vertical notch, anyone who wants to cut a sealing ring of any kind is forced to go to the bead of the bottle neck with the blade to be 100 percent sure of cutting resulting in damage to the bottle.

Although in the present description reference is mostly made to bottle-shaped packagings, the teachings of the present invention can be applied in any type of containers such as bottles and jars equipped with a neck on which the sealing ring to which the cap is anchored by means of a strap can be applied, as well as containers for takeaway food or similar, having valid dimensional references, a marking system, a weight and a material compatible with the characteristics of the deposit/collection apparatuses, nevertheless being packagings identifiable as approved to be included in the system.

On the left side of Fig. 1 is shown, for example, a typical bottle commonly used for food oils as can be seen from the presence of the typical pourer 6.

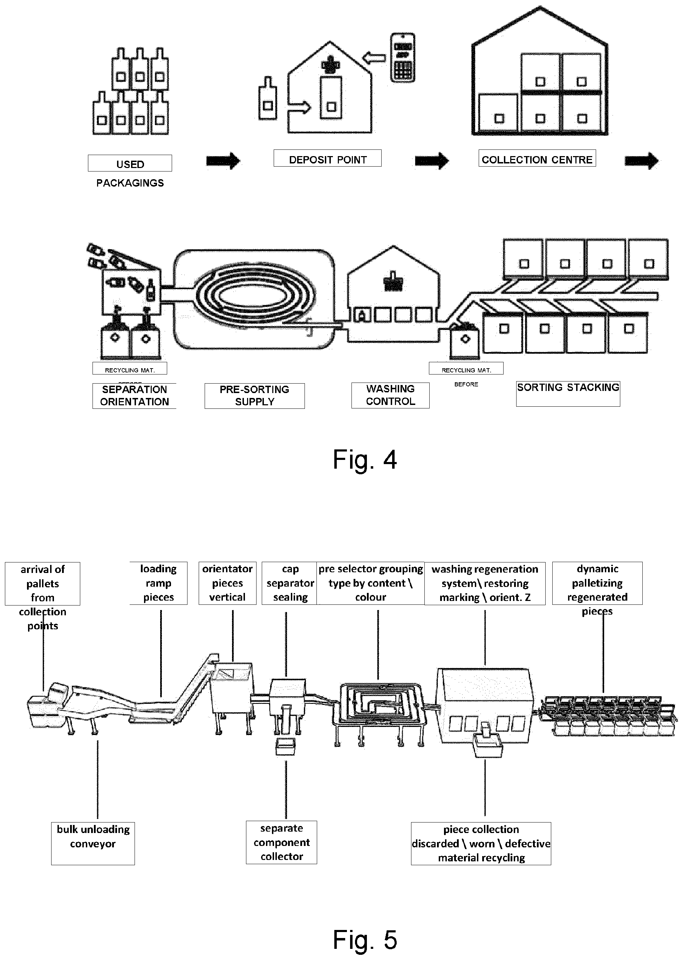

Fig. 4 shows a schematic of a packagings recycling/regeneration system according to an embodiment of the invention.

Fig. 5 shows a three-dimensional view of the lower part of the previous figure.

Used packagings is delivered by consumers/depositors to a deposit/collection unit (or deposit point) before reaching an orientation and separation unit, possibly after intermediate transit at a collection/sorting centre at origin.

The first operation to be carried out consists of separating the various elements of the package according to the process defined by the type of label and the information contained in it by means of markings.

The first element that needs to be separated is the cap. Separation must take place both if the cap is screwed or unscrewed, where in the latter case it may also have been detached from the seal in use and not be present.

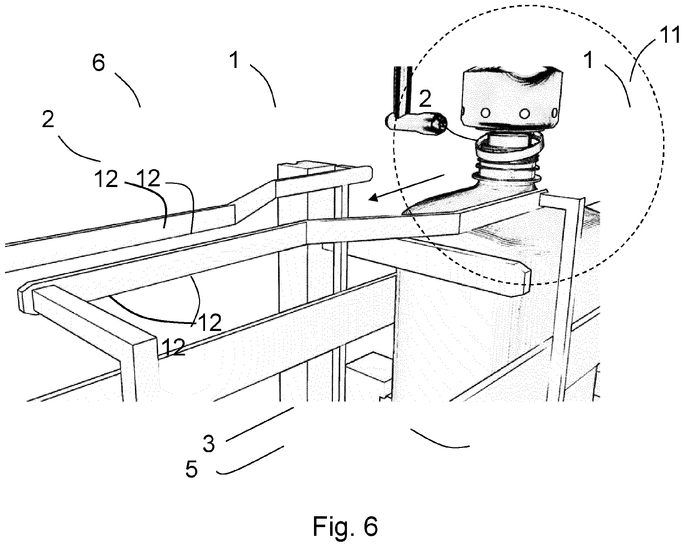

Fig. 6 shows a unit 11 that provides for unscrewing the caps still screwed on the neck of the packagings.

In the next step, the package is conveyed in the direction indicated by the arrow through the guides 12 towards the cap separation unit 11 described above with reference to Fig. 2. In the figure are shown the blades 110 that cut the sealing ring 2 by slipping into the slots A obtained in the bead or annular coupling projection 3 of the neck.

Adjustable and programmable compressed air jets will convey the separated pieces of the product (caps and/or labels) to special mouths designated and colour-coded, in order to operate this separation at the origin, immediately obtaining a non-virgin but still pure material, which essentially requires only rinsing and grinding to be reused to mould new semi-finished products.

If the label is of a single-use type, in this case it is detached and then stored and recycled according to the material it consists of.

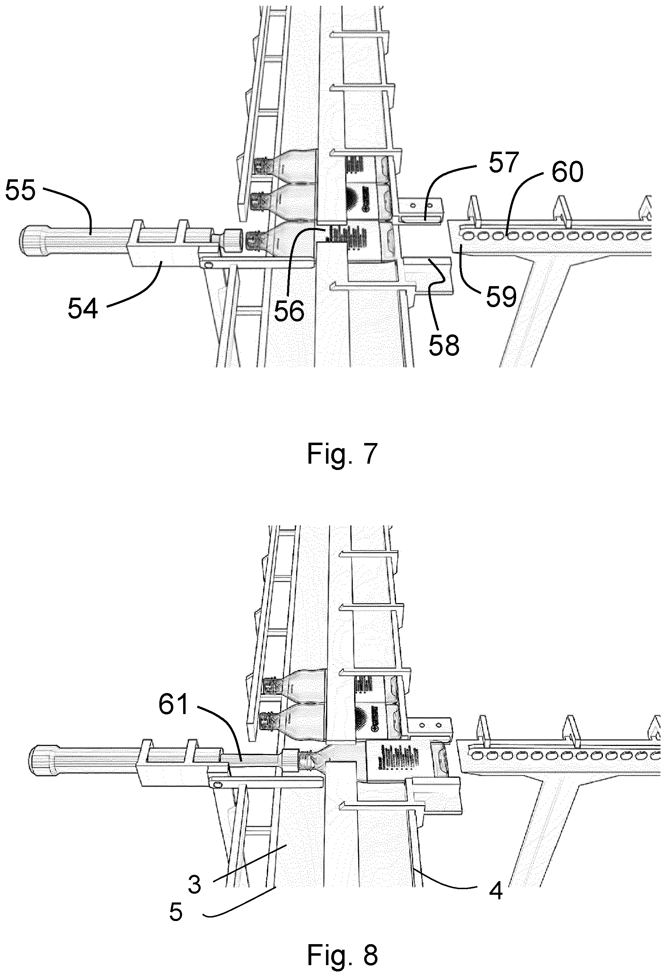

Fig. 7 shows an example of a label separation station. This comprises:
a fixed structure 54 holding the pneumatic piston 55;
The compartment 56 in the upper guide to allow the stroke of the piston 55;
A fixed blade 57 with calibrated projection;
A contrast bead 58 that compresses the bottle towards the blade 57.

A label recovery structure 59 with discriminating inclined plane mode

A rotatable wheel carriage 60 for transporting the separate label.

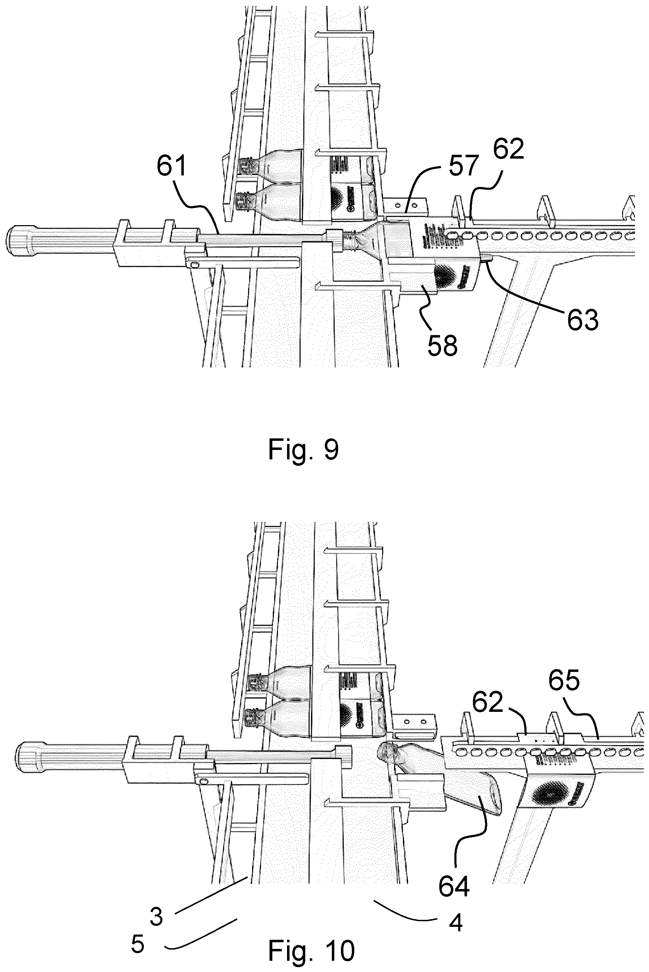

The following figures 8-10 show the sequence of steps leading to the separation of the label summarized as follows:
The stem 61 of the piston 55 starts its stroke by pushing the bottle between the bank and the blade.

The blade 57 collimates and aligns with one of the notches 4 on the bottle depending on its orientation, avoiding interference with it, thus improving the cutting and durability of the blade.

The label 62 then passes over the structure 54 and is intercepted by the wheeled trolley.

The part of the bottle corresponding to the bottom 63, showing its physiological rounding, is pushed downwards and discriminated with respect to the label by the inclined plane of the structure 59, while the cut label remains in a horizontal position, where a slight puff of air can be used to guarantee consistency, which is introduced between the bottle and the label from right to left looking at the image, consequently pushing it upwards.

The label separation cycle ends.

The label 62 is transported to the appropriate storage container.

The bottle 64 is directed by falling towards its appropriate container or hopper.

In the case of packagings that is recyclable, but not reusable, or no longer reusable as it is worn, once the cap and label have been separated, the process generally ends with the grinding of the individual parts as separate.

In the case of non-end-of-life regenerable packagings, the system, according to one embodiment of the invention, provides for a washing operation according to the known art and/or specific developments thereof, functioning to the best efficiency according to the established criteria of the system.

The washing step is followed by a dynamic and selective palletizing step of the regenerated packagings, and preceded by a pre-selection/grouping step.

In the pre-selection step, a preselector is able to recognise, by means of colour detectors and by the background or predominant colour of the label, the coded family of substances contained, so as to group the packagings in order to facilitate a process specifically aimed at ensuring that the regenerated packagings are always used with the same/identical substances.

The regenerable label element remains integral to the bottle at all times and is washed and sanitized with it, thus representing a single instance of processing cost.

At the end of the process, the lettering, codes and deadlines are renewed by applying opaque colour, and then reprinted with the updated information at the end of filling/packaging.

If the regenerable packaging is at the end of its life, the system advantageously provides for the scraping of the print on the cover/label to obtain a recycled product completely free of contamination, essentially to avoid colour alterations, but also toxicity due to any alterations of the inks during the step of re-melting the material.

In any case, the package is tracked at the time of deposit and all the information will follow it until the final check, when once regenerated it can be reintroduced into the production cycle.

In practice, each palletizing station is dynamically assigned with a single unique container model (e.g. type A round litre bottle), as well as a single brand associated with a unique product.

The system is self-programming upstream based on the tracking of the content of the pallets on arrival and their succession in the processing, for which planning is already in place at the collection/sorting centre, upon arrival of the pallets in the washing department.
The system is capable of operating on packagings however they are collected. However, according to a particularly advantageous embodiment, the unit used for the deposit/collection of the packagings is an integral part of the system as it operates a pre-selection of the packagings compatible with the system itself by reading the information on the label at the step of delivery of the packaging.

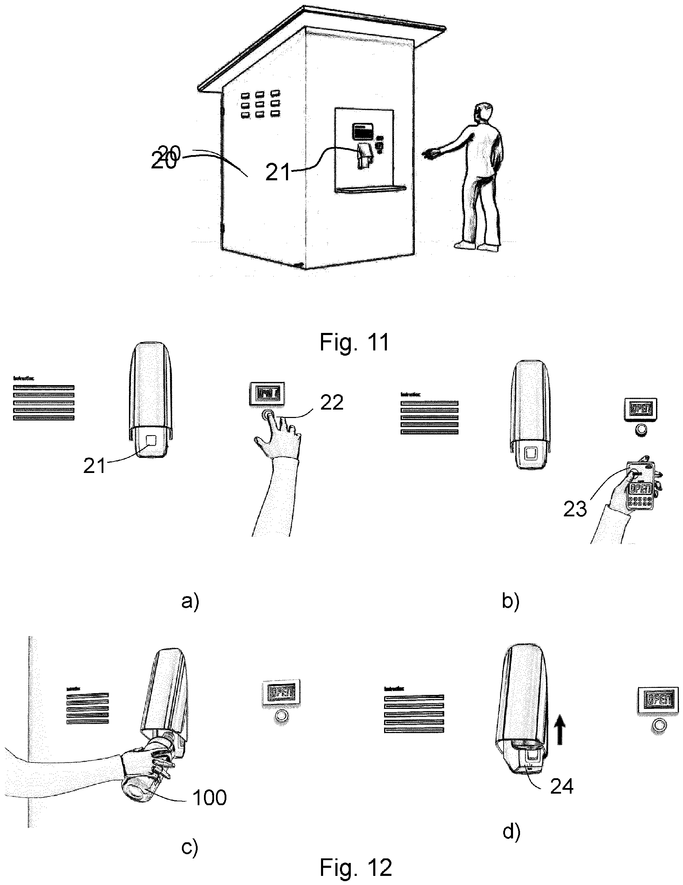

Fig. 11 shows an example of a collection unit particularly suitable for the purpose.

In its most essential form, it is an apparatus consisting of a cage that is typically made of sheet metal 20 capable of containing at least one standard pallet. This structure has a window 21 for entering the package used, with very precise dimensions based on the packaging standard, with close tolerances and calibrated on a certain format or group of formats, with sensors appropriately positioned in such a way as to collimate, detect and, therefore, activate only in the presence of such formats or groups of specific formats compatible with the system.

Once the apparatus has been enabled by a user, for example through an App on a smartphone or personal magnetic card, and the adequacy of the package placed in position subsequently recognised by the sensors by reading the markings on the label element, as well as the marking on the body of the main container and made indelibly by means of laser engraving, which overall must also by default be associated with each other and active, by means of comparison with a reference management database, an air jet is automatically activated that projects the product or container/package used upwards, until it falls back into the cage of the internal pallet.

Fig. 12 visually summarizes the sequence of operations that must be carried out for the delivery of a packaging into the collection unit 20.

The machine is enabled, in one of its possible alternative forms, by pressing a button 22 which returns a temporary code (Fig. 12a).

Through a mobile software application 23, which automatically enables the location, the user, by entering the code, will define their proximity and identity, activate the apparatus and consequently their deposit credits can be calculated (Fig. 12b).

The user then inserts the packaging 100 into the opening 21 (Fig. 12c). If the packaging fits perfectly in the compartment and is recognised as compatible by reading the codes or markings, the jet of air coming from the nozzle 24 on the base of the opening 21 will convey the packaging upwards (Fig. 12d) along a duct 25 leading to a pallet 26.

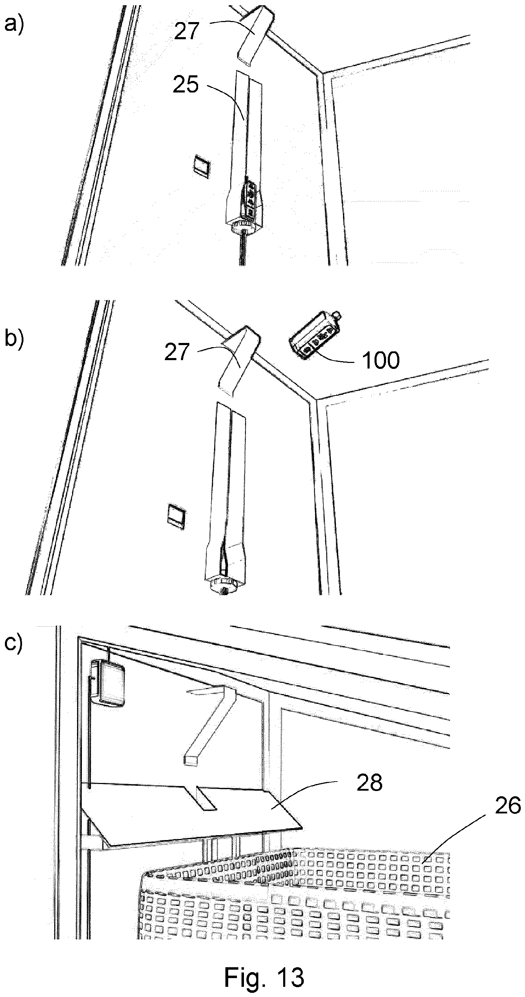

Fig. 13 shows in sequence the transit step of the packaging inside the collection unit 20. At the top, at the end of the duct 25, there is an inclined element 27 that deflects the trajectory of the packaging 100 so that it can fall into the pallet 26 (Fig. 13c). The intermediate wall 28 prevents the packagings 100 from falling outside the pallet 26

It may be envisaged to install a scale in the base of the opening that controls the weight of the bottle, which may still contain too much residue to be pushed by the air jet.

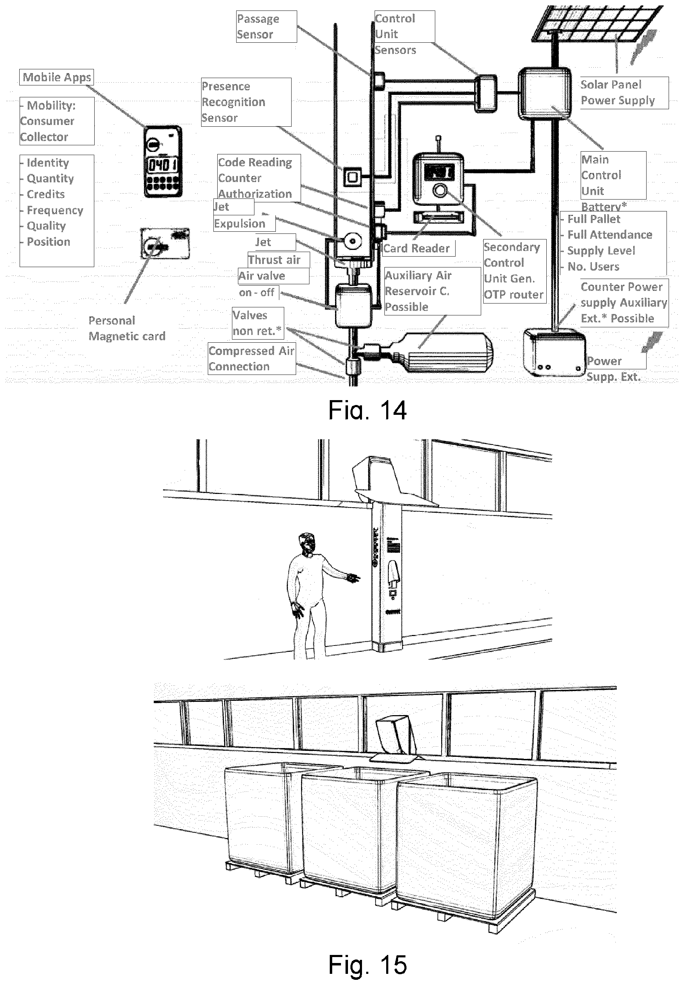

Fig. 14 summarizes in exemplified form some of the features of the collection unit 100 described above.

Such a unit, which requires little force and in itself has little chance of causing damage, should nevertheless provide a complete safety requirement, which in primis is fulfilled by preventing the user from being able to slip fingers or objects on or alongside the inserted container, since it is encased in the compartment with precise positioning and tight tolerances, then self-saturating every possible interstice, in the same way and with the true function of a key (the packaging) in the lock (the compartment), where if the former is introduced incorrectly or even slightly moved when enabling the puff of air, the sensors stop correctly matching the markings of the assigned codes and the system does not continue its process. On the other hand, there is an ejection system, again by air jet, which avoids the complications of hazards due to mechanical devices, in case something goes wrong. It is, for example, a nozzle placed on the front wall inside the compartment/opening, which when activated rejects the package introduced therein towards the outside, for example if it is not compatible with the regeneration/recycling system of which the collection unit is part.

The base of the device, including the nozzle for the main air jet, which pushes the package along the input channel towards the internal pallet, can advantageously be translating or rotating flush with the compartment and appear only at the time of activation of the device so that the nozzle can never be tampered with/plugged by malicious persons.

In this way, it is possible to obtain collection loads that are always free of any unforeseen foreign elements or contaminants, a very important aspect in the packaging recycling/reuse chain.

Due to its lightness and impact resistance, plastic material is the element of choice in the harmonization of this collection/selection step, although the possibility of using other materials such as, for example, glass is not excluded, except for a transport/introduction system for obvious reasons different from pneumatic transport and appropriate to the weight and fragility of the material or other characteristics of which the package is composed.

The air-jet system is particularly advantageous because it avoids complex mechanical devices and thus greatly reduces costs for the apparatus, consumes very little energy, and can be connected to supermarket compressors, which are always running and by their nature subject to high waste of recoverable energy. It also allows the deposit/collection apparatus to be easily developed in height, consequently reducing the size of the footprint.

This collection unit, in fact, given the reduced volume of the components, can also be easily developed vertically as in the version illustrated in Fig. 15 and therefore allowing the use and enhancement of available spaces inside buildings, even at very high levels, by interposing synchronised and duly spaced intermediate transport stations to the introduction channel. Note the extreme practicality and low floor space consumption that this installation can achieve.

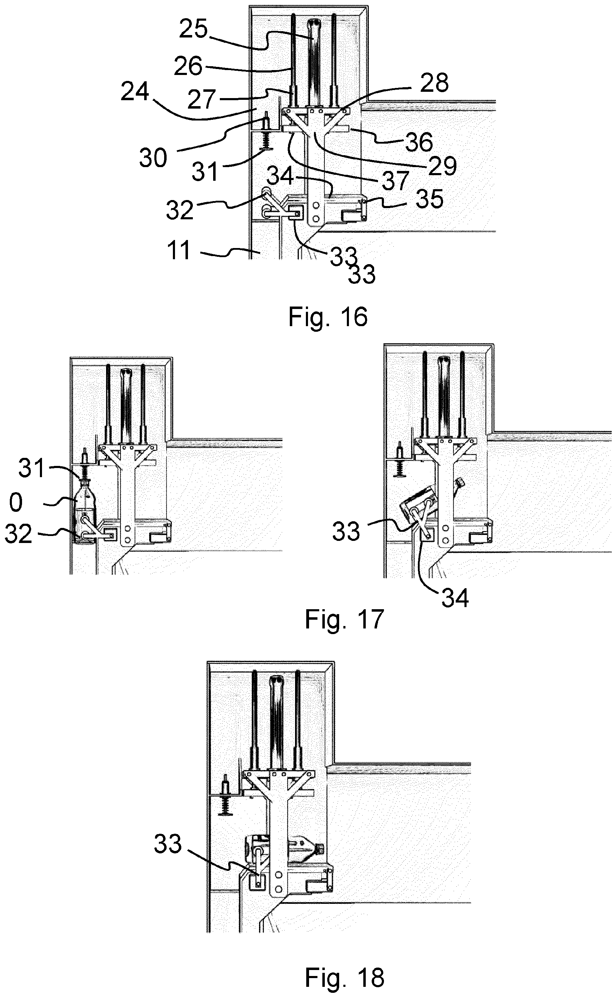

When the collection unit is specifically designed to work with non-regenerable packagings, a press may be used to crush the packaging before it ends up in the pallet. Figs. 16-21 show an example.

Specifically, Fig. 16 shows a typical essential, alternative and non-binding configuration of the press pre-treatment sub-apparatus placed at the top of the main apparatus structure. The sub-apparatus is positioned at the end of the bottle introduction channel 11 and consists essentially of the following elements or virtually similar elements:
specific compartment of the sub-apparatus 24;
pneumatic piston 25;
system of columns and bushings 16, 27 for guiding the descending movable table 36 of the press;
fixed surface 28 of the press;
rest of the fixed structure 29 of the press;
authorization device/switch 30 for the action of the horizontal grippers 32;
sensor 31 for the authorization device 30;
pneumatic horizontal grippers 32 that are operated as soon as the bottle touches the sensor 31;
tilting carriage 33 for the grippers 32;
tilting table 34 which is driven after bottle crushing;
carriage 35 for the tilting table 34;
moving table 36 on a vertical axis corresponding to the bottle presser;
indentations 37 protruding from the plane 36 and corresponding to possible tips to perform an ultrasonic welding of the bottle walls, aimed at eliminating the springback of the bottle shape.

Fig. 17 shows the bottle at the end of the vertical stroke, blocked by the grippers 32, activated by the sensor 31 and the tilting carriage 33 during operation moved by a small electric or pneumatic scooter 39.

In Figure 18 the tilting carriage 33 is at the end of its 90° excursion.

Note how the sensor 31 advantageously features a spring to allow the bottle to rotate and return to its position. However, such a device could also be implemented in a totally digital form, i.e. based on photocells for example with laser technology. In addition, the various floors of the structure are shaped so as to eliminate collisions and jams.

The grippers, once rotated as illustrated, then release the bottle and the carriage 33 returns to position, while the movable press table 36 begins its descent.

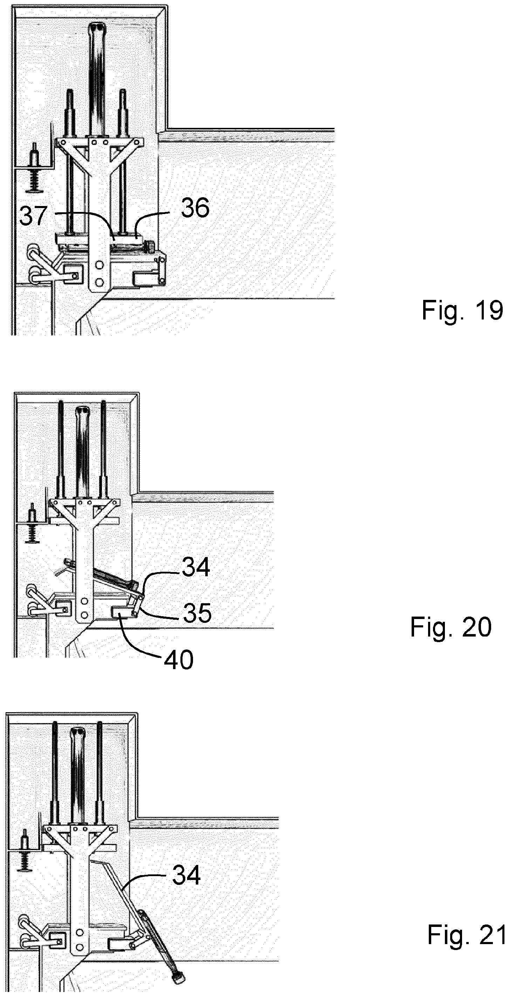

In Fig. 19, the table 36 compressing the bottle is shown. At that point the ultrasonic welding tips 37 can be operated, suitably positioned so as not to interfere with the label that must be detached. Ultrasonic welding is characterized by the need for low volumes of energy and is the most suitable in PET. It requires an exposure of the entity to be welded of a few milliseconds and is itself a very economical, safe and stable, low-maintenance piece of equipment.

In Fig. 20 the tilting table 34 connected to the carriage 35 starts its stroke driven by the motor 40, for the introduction of the bottle into the basket inside the apparatus.

In Fig. 21 the tilting table 34 ends the stroke and the bottle falls into the basket. The rotation speed of this table 34 can be programmed to alternate between different modes, in order to direct the bottle at times to the adjacent zone of the basket and at times to the opposite zone, so as to distribute the load more evenly.

The bottle is then ejected and the apparatus can return to the default position.

In another embodiment, the collection unit takes on a different form particularly suitable for use in a high-attendance event/show context.

Small or non-existent spaces make it difficult to place packaging deposit/collection points with a certain capacity.

To respond to the problem, the invention provides a "flexible" deposit/collection apparatus, virtually identical to the one described above except for the absence of the start-up and user recognition system in order to circulate very quickly the intense deposit requirements determined by the context.

That is, this system remains permanently switched on with the sensors active. As soon as the container is introduced and recognised by the code reading, the container as a whole, here with its extended function of activation key and authorization, bypasses the user authentication step, at which point the puff or jet of air automatically starts and the consequent introduction of the package into the internal collection pallet, package complete with all its recoverable elements.

In an event-specific system, it is normally not necessary to provide an incentive to deposit, as the system is already based on the provision of a practical, value-added waste disposal service for consumers, who obtain it by following the prescribed procedures and rules, where amends can be made for the general advantages derived from widespread good behaviour, shared example and educational value of a well-designed system: in the specific context all particularly conditioning and rewarding factors. However, it cannot be ruled out that only the deposit may be refunded, which can be obtained, for example, by photographing the QR code on the pack and entering it in the app provided/proposed at the time of purchase, e.g. by wireless proximity alert or by reading the software activation QR code.

At the time of purchase, the user can simply accept the proposal to install a mobile software application and using this, just before the deposit, take the photo of the QR code placed on the package, then confirm their current account details or otherwise to obtain a refund at their leisure.

The processed bottle will be recognised and associated with the most up-to-date reading of the QR code, then the identity and account of the buyer (this is because someone could photograph them without buying them).

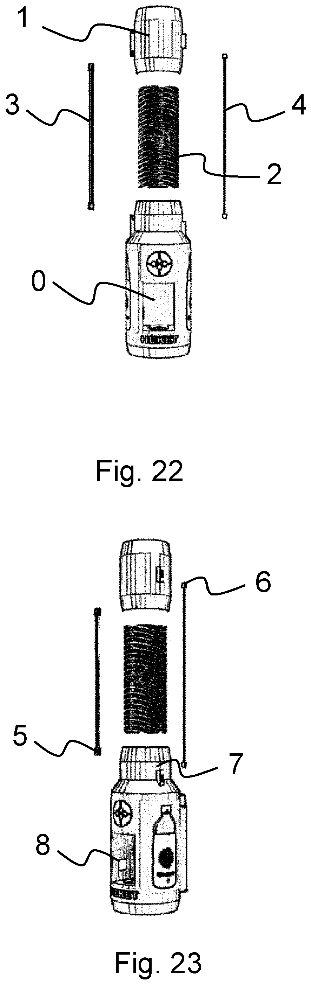

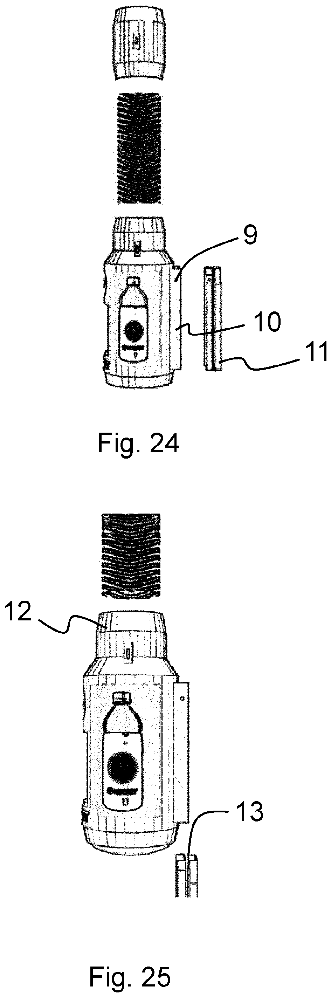

With reference to Figures 22-25, the elements that make up the active part of the collection unit are as follows:
Main intrusion/blower apparatus 0: consists of the air passages and a solenoid valve for blowing, activated by the reading authorizations of the coordinated markings, placed on the package at the points already indicated, i.e. specific and standardized points placed both on the main container and on the regenerable label or traditional label element. As already mentioned above, the system for reading the coordinated codes and consequently tracking the package, must be able to interface and compare with a recognition database, which in the case of an event system, may also not be centralized, but loaded on the local management software, and compiled on the basis of a specific and contextually limited batch of packages.

Intermediate blower 1: consists of a series of nozzles arranged in a ring, of a solenoid valve that is activated immediately after the passage of the bottle, by means of a photocell.

Flexible tube 2 for the passage of the deposited packaging.

Quick-coupling air tubes 3 to be wired included or adjacent to the tube 2.

Analogue and/or digital power/communication cables 4 between the various cells synchronised in series.

Air quick coupling 5.

Male quick coupling for electrical power 6.

Female quick coupling for electrical power 7 (in apparatus 0 it should be either internal or lockable and in any case as concealed as possible to prevent tampering).

Packaging insertion compartment 8.

Pin 9 for fixing the flexible apparatus with padlock/lock.

Mobile dashboard 10

Fixed dashboard 11 that is installed on walls and structures by means of two large screws.

Quick coupling 12 for the transport tube.

Quick coupling 13 for the flexible apparatus (once installed, the dashboards can also be left in place for the next event, with considerable savings in installation labour).

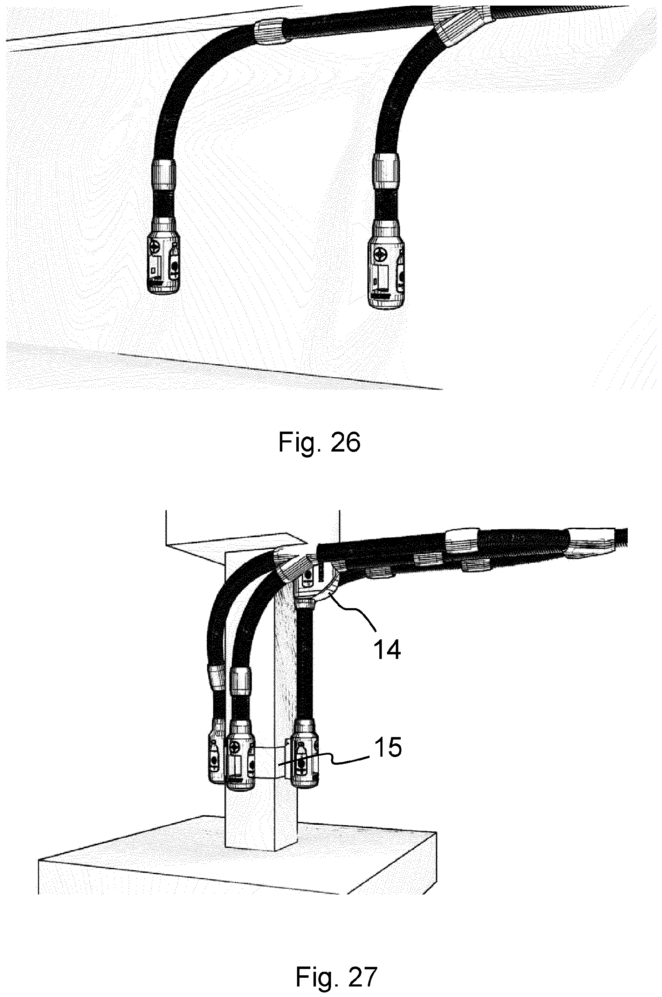

Fig. 26 shows an example of wall installation, Fig. 27 shows an example of a column installation in which it is possible to see an orientator 14 that rotates the packaging by 90° when it is not possible to bend the tube and a flange 15 on quick installation columns, to be adopted when it is not possible to drill load-bearing structures.

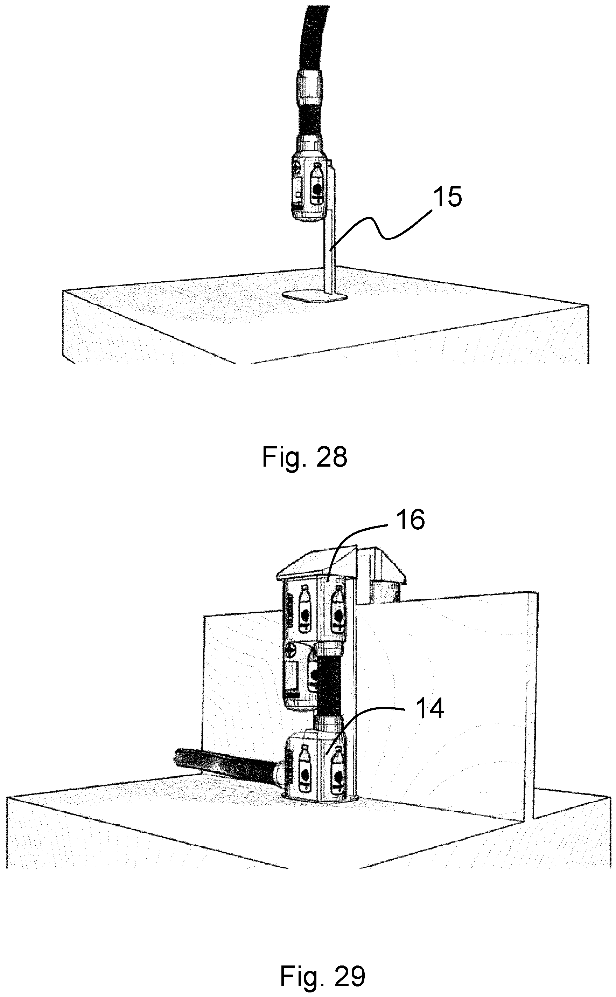

Fig. 28 shows an example of installation in open space when there is the possibility of fixing the tube at the top then exploiting a metal structure 15 temporarily fixed to the ground, with integrated dashboard 11.

Fig. 29 shows an example of installation in open space when there is no possibility of fixing the tube at the top in which there is an orientator 14 that rotates the packaging by 90° when it is not possible to bend the tube and a translator 16 that translates the container without rotating it.

Let us now turn our attention to the packagings that was designed to be used in the system according to the invention, in particular the regenerable packagings.

All the components of the regenerable package have been designed with a view to an all-round increase in performance with respect to the common standards, greater durability, safety and, indeed, with a view to a management focused on quality and economy of collection and regeneration with further exclusive advantages for packaging and repackaging, determined by the presence of the co-ordinated standards as designed, aimed precisely at harmonizing and simplifying the system in each of its phases, first of all obtaining savings, versatility and efficiency, then, at the end of the greatest possible number of reuse cycles, with a view to optimal conditions for the recycling of the materials that make it up.

Depending on the solutions adopted, the cost of package is absolutely in line with the market prices of high quality disposable packages, for example PET bottles for fine products such as extra virgin olive oil, but with much greater performance, guarantees and visual and tactile impact.

The technical principles of the various package components have also been designed to be easily adapted to take different/distinctive forms, which will eventually define a specific use in relation to the type of content.

Each of these possible variants will form a precise standard and/or even a group of compatible standards, which consequently must be managed throughout the process in its own way, that is, without being able to be introduced or interact in any way in the context of another format or other groups of formats. This discriminating factor serves to separate and keep very well apart packages used for foodstuffs, for example, from those used for chemical products.

The cap is the only one of the package elements that cannot be regenerated, as it also covers the function of a breakable seal.

It consists of a closure that in a recovery logic is best valued when it is of the "Tethered Cap" type that has been introduced and already widely adopted (by law in official force since 2024) to limit the dispersion of caps into the environment, but which under optimal management conditions as set up in the system according to the invention, also allows the entire cap to always be recovered for material recycling in a very selective and optimal manner, compared to how it may be in a recovery system from packagings waste destined for recycling, where the cap material is essentially completely lost because it becomes excessively contaminated with the resulting plasmix which can only be incinerated and which currently accounts for about 50% of the product derived from the overall collection, since it consists of everything that is shredded with the bottle and includes other unavoidable contaminating elements, and is then separated by flotation (density difference).

This special closure can be designed with criteria responding to a circular packagings context such as the one in question in the optimal shapes and masses to be produced even with percentages of material recovered and reused several times (currently the regulations give limitations on recycled but not on ground, which is a different matter), and also in such a way as to be easily separated from the bottle by selective recovery and clean recycling, which is essentially done by mild washing and shredding into flakes of the caps, which will then be melted and re-granulated to be perfect again for highly technical moulding.

The most suitable material is HDPE, for example, but it could also be PP, at least in particular cases.

The bottle has particular characteristics that together with the label element make it more robust and durable, as well as, a very important aspect, immediately distinguishable from any other common commercial package.

The container/bottle is made of normal PET in as widespread a grade as possible and, if necessary, with limited additives for greater durability: an exceptionally suitable and safe material, which, however, is better suited to thin thicknesses rather than those over 0.7 - 0.8 mm, which are in any case already high and with a consistent toughness yield.

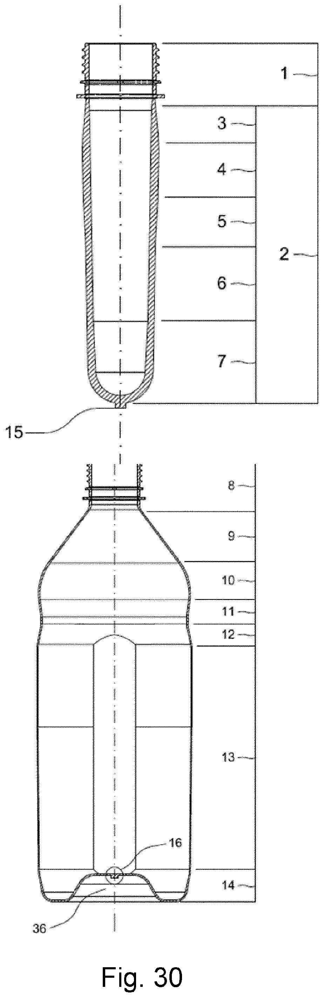

In order to solve and overcome this and other possible limitations of the material by further enhancing its characteristics in the form of a container, thus being able to obtain a high-performance, stable and robust bottle without any special costs and burdens, a variable-thickness preform was designed (shown at the top of Fig. 30), that is, higher only in the upper part of the bottle, which can reach points located even at 1.0 - 1.2 mm without jeopardising the stretching/blowing process during the moulding step, nor the cooling and processing times and, as a consequence also of the rounded shape as designed, make the exposed zone much more robust, then keeping the lower and wider part of the bottle, that contained in the cover/label element, with the thinnest thickness within the range of best machinability, which will be what will give robustness and stability, as well as protection.

This results in a robust container that both shows the contents on view, at least when the pack is intact, and at the same time largely preserves it from sunlight and heat to which PET is also quite sensitive, thus an exponential degree of preservation of the contained product is obtained compared to traditional containers made from the same materials.

This bottle is composed of a neck 1 and a body 2 like common bottles and is obtained from a preform, for example by blowing. The body is always an element that can be developed as desired by reproducing any shape, while for the neck there is already a range of standards of various sizes, which have always been primary references for cap design, so it is only a matter of identifying the most versatile and suitable and/or most widely used reference, or in defining the cap plan a new standard as needed.

In the bottle preform shown at the top of Fig. 30 the following elements can be identified:
a zone under shoulder 3 with increasing thickness;
a zone 4 with maximum thickness;
a zone 5 with decreasing thickness;
a zone 6 with stabilised thickness representing the zone of maximum stretch;
a zone 7 of increasing thickness;

The bottle formed by blowing/stretching this preform has correspondingly:
a zone 8 not subject to blowing/stretching;
a zone 9 with medium-high thickness;
a zone 10 with maximum thickness;
a zone 11 with intermediate decreasing thickness;
a zone 12 with final decreasing thickness;
a zone 13 with minimum stabilized thickness;
a bottom zone 14 with a slightly increasing thickness;
a blank 15 of the injection point of the preform moulding;
a pin protrusion 16 that when heated and expanded blocks the regenerable label cover;

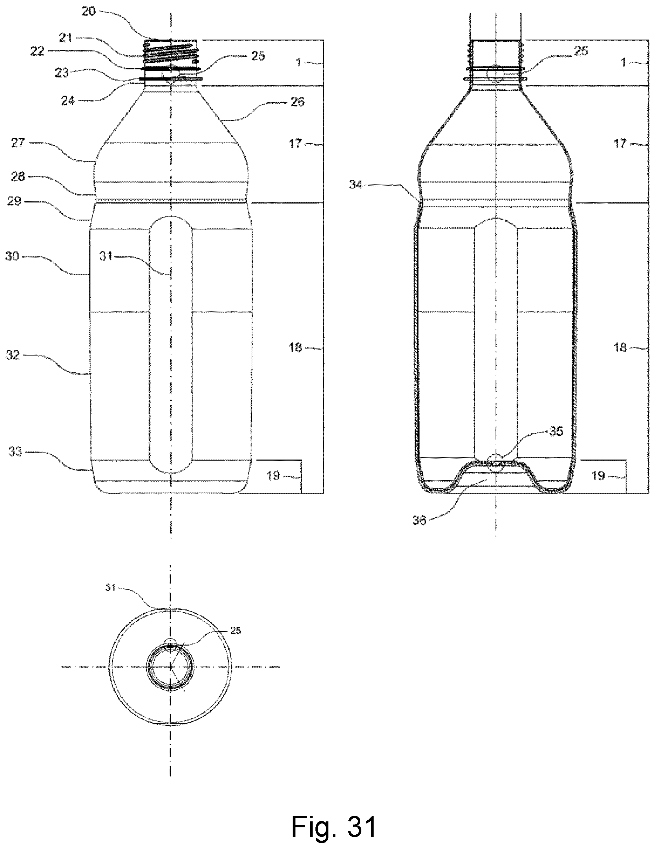

Fig. 31 shows the detail characteristics of the bottle of the previous figure. These comprise:
a visible PET bottle zone 17;
a label/cover zone 18 that wraps around the lower part of the bottle body;
a tapered zone 19 corresponding to the base or bottom;
a mouthpiece 20;
a thread 21 for a screw cap;
a coupling bead 22 for the ring seal;
a shoulder 23, that is, the bead usually used for the movement of the piece by means of special grippers;
a sub-shoulder 24 where the grippers act to move the bottle in line;
particular notches 25 on the bead 22 and the shoulder 23 that allow the seal to be cut and separated as described above;
a zone of the bottle called the bell 26;
a zone of the bottle with a rounded shape 27
a gripping/bottleneck zone 28;
a gripping/tapering zone on the label/cover 29;
a zone of the label/cover 30 that is straight and aligned with the axis;
a lateral plane 31 obtained on the label/cover, both to discriminate xy orientation, and to affix markings and lettering;
a slightly conical zone 32 of the cover, in order to facilitate moulding in the case of an injection mould, i.e. when the semi-finished product is not made by extrusion/blowing.

A tapering of the bottom 33 for both aesthetic purposes and to strengthen the zone.

A sealing barrier coupling point 34 between bottle and cover;
a tamper evident fixing zone 35 between bottle and cover, made by ultrasonic welding;
a convex zone on the bottom 36 adapted to give strength but above all to adjust the amount of product contained between bottles of the same size but with a different base geometry, making it possible to maintain the same height of the container, and the same level of flush product.

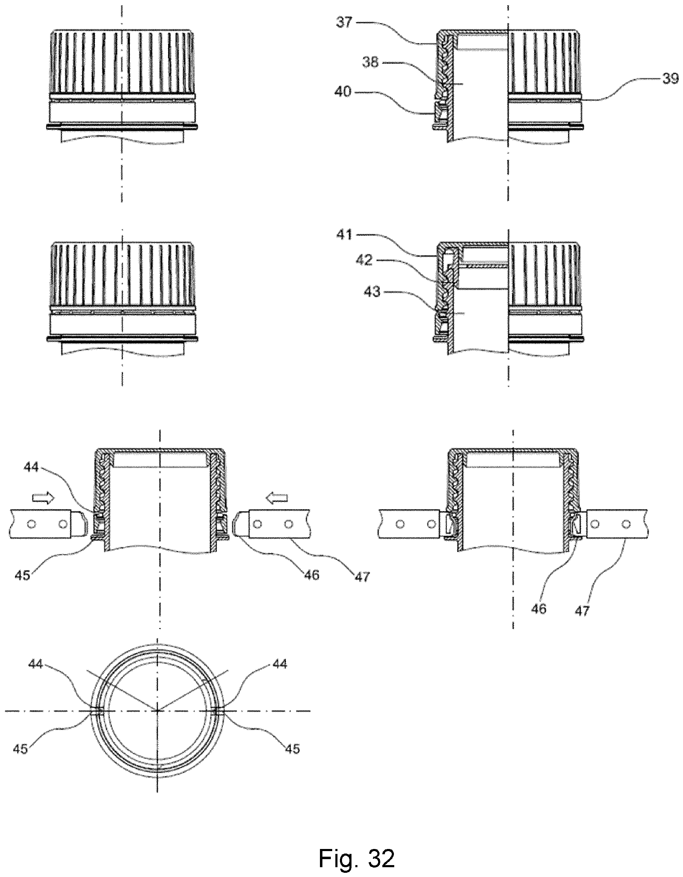

In Fig. 32 the details of the cap and the notches used for the removal of the sealing ring by means of opposing blades are shown. Specifically, the figure shows:
a one-piece cap 37 typically used for packaging water and beverages;
a bottle neck 38 suitable for the one-piece cap 37;
bridges 39 between the cap and the sealing ring that, when broken, show that the bottle has been opened;
a sealing ring 40 that by means of the internal shape engages on the bead 22;
a two-piece cap 41, that is, including a pourer 42, typically used for the packaging of food oil;
a bottle neck 43 suitable for a two-piece cap 41. To maintain the same height between packagings that use one-piece and two-piece type caps and to maintain the same height between the two caps in order to avoid adjustments in the assembly line, it is advisable that the aforementioned neck is correspondingly reduced in height;
a notch 44 on the bead for coupling the seal to the neck of the bottle, to eliminate interference during the action of the cutting blade 46;
a notch 45 on the shoulder of the bottle neck used to eliminate interference during the action of the cutting blade 46.

The figure also shows an automated blade 46, with blade holder 47, aligned with the notches that, working in pairs, cuts the sealing ring to separate it from the bottle when recycling/reusing the package.

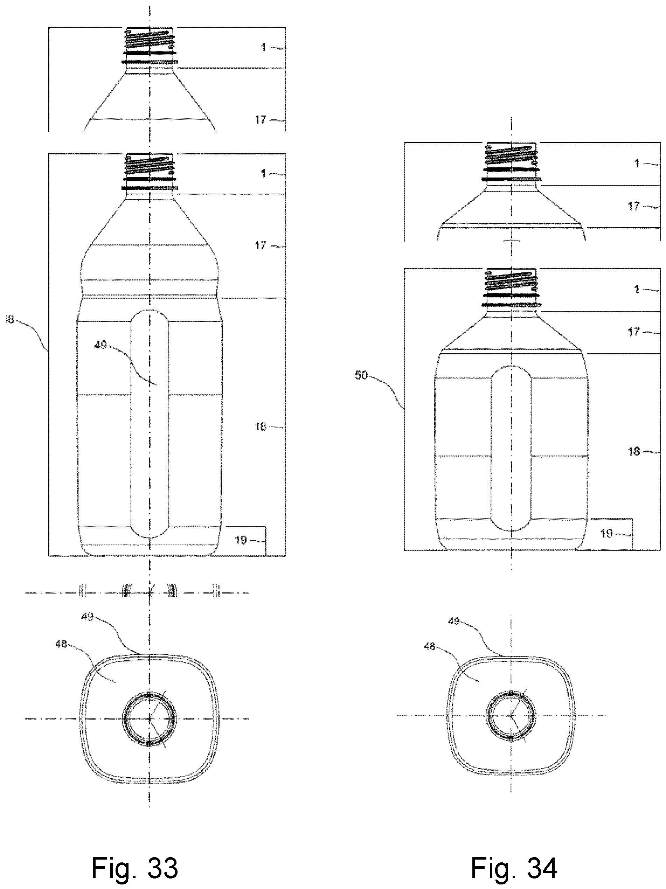

Fig. 33 shows a one-litre bottle version with a quadrangular base 48. The three overall dimensions (height, width, depth) remain unchanged for complete interchangeability.

The lateral plane 49 obtained on the cover label is analogous to the lateral plane 31 seen previously and is necessary both to discriminate the xy orientation and to affix markings and lettering.

Fig. 34 shows a version of a half-litre bottle 50 which, like the litre bottle, can alternatively be round (slightly oval), quadrangular, or other polygonal shape with corresponding dimensions. The two overall dimensions (width, depth) remain unchanged to achieve complete interchangeability by varying the height of the packaging line alone. Consequently, the intermediate formats will also have the same characteristics.

The label element must be conveniently composed of the same material as the cap and remain integral with the bottle until the end of all regeneration cycles and can then be easily separated for recycling of the material. The actual graphic label must, therefore, conveniently be a particularly resistant direct print.

All the management of the package in the collection and regeneration process will be conditioned by this characteristic cover/label element, with its specific template, its graphics and marking appropriately positioned, and first of all by its dimensional standard based on the type of content (food or not), then by the background colour of the material of the element itself for a first possible division of product category.

This element, through the modulation of weights and masses, also has the function of obtaining the optimal centre of gravity for the automatic handling of the empty bottle.

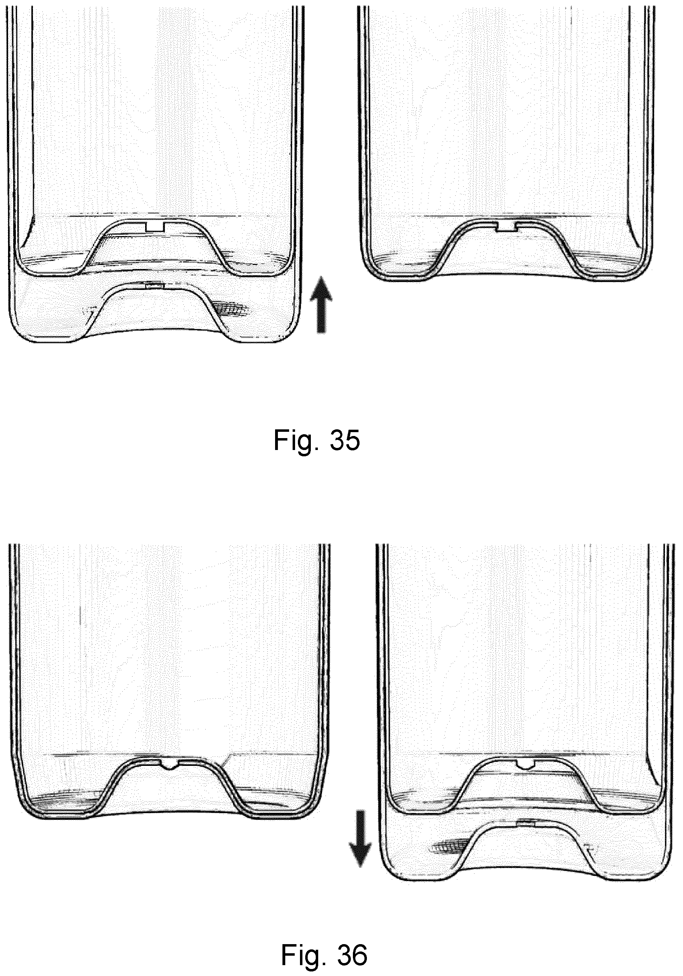

Figures 35-36 illustrate the steps of automatically managing the label element in the coupling steps first, and then the subsequent separation from the bottle at the end of reuse cycles, towards the recycling of the material.

By mechanical removal with the welded and embossed bead of an embossed sealing lettering, the two parts can be separated.

If, due to any need attributable to the contents, the need arises to separate and re-assemble the two elements, bottle and cover, during the regeneration steps, the welding/re-stamping operation will be omitted. This will not compromise the safety of the package since the two elements will always be associated digitally/virtually.

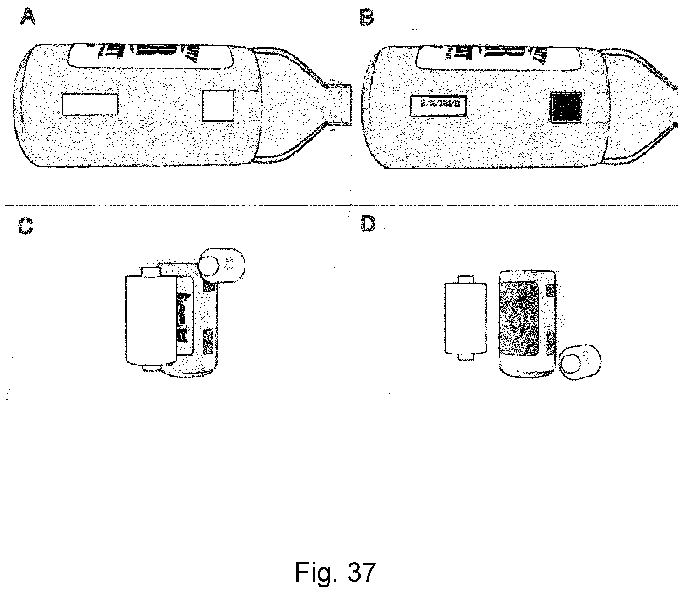

In Fig. 37, steps (A) and (B) represent the reconditioning of this element at each regeneration cycle, whereby the transitional markings are first covered with ink (A) and then the new commercial lettering, e.g. expiry date, etc., are reprinted.

The label/brand therefore remains integral to the bottle and, apart from the aforementioned lettering, unchanged for the entire number of regeneration cycles, resulting in considerable savings in materials, adhesives, inks and manufacturing and application processes.

Steps (C) and (D) represent the automatic removal, in this case mechanical, by scraping the ink from the label element at the end of the life of the package, so as to be able to recycle the material without the presence of the slightest contaminating factor or altering the original colour of the semi-finished product. Also in this case, the operation is facilitated by the permanent references inherent in the package as a whole and essential to manage this type of regeneration/recycling processes.

With regard to packages with increased recyclability according to the invention, these have the following characteristics:
These are, for example, uniformly thick PET bottles that are 30% to 50% thicker than the average of other bottles on the market with the same content capacity.

The greater thickness is used to keep the shape of the bottle intact, allowing correct automatic handling operations.

The label is made of heat-shrinkable polypropylene, similar to those currently in use, but with a slightly higher thickness, in order to guarantee its integrity until it is separated from the bottle and subsequently recycled.

The ring of the tethered cap has a shape that passes and intercepts the seal coupling collar of the bottle, so that the latter acts as a contrast in the operation of cutting and removing the sealing ring itself.

There are notches and special shapes in the zone where the sealing ring is housed on the bottle, adapted to eliminate interference and collisions between the seal cutting blade and the specific zone of the bottle neck, a zone the orientation of which is determined by the template plane that serves to correctly manage the orientation of the bottle during the deposition and processing steps.

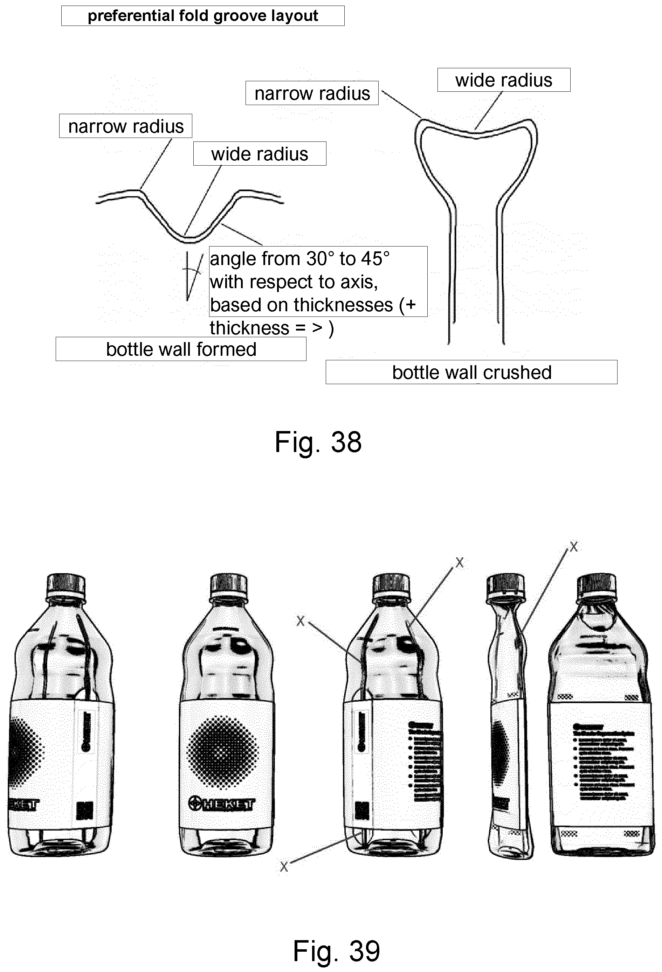

The shape of the vertical notches has the dual function of determining a preferential point of failure of the bottle during the crushing steps and serving as an anti-overlapping and notching surface to avoid interference during the conveyor belt steps and following cutting and removal of the label. These notches are preferably V-shaped with the radius on the broad tip and the two lateral radii as narrow as possible, since they are the same in symbiosis to flex, thus obtaining a front band of a certain magnitude and concave as shown in Fig. 38.

As shown in Fig. 39, the bottle is expected to be squeezed horizontally according to a precise criterion, to reduce the overall dimensions during storage, thus reducing transport costs. The line also indicates the unique identification code stamped by laser engraving on the bottle. A particular type of duly structured graphic font will also serve as a recognition and approval reference for the introduction into the collection apparatus by the sensors.

During the crushing, provided in the deposition step, a series of ultrasonic welding points can also be provided, arranged to glue the inner walls of the bottle, in order to deactivate the volumetric return due to the elasticity of the bottle. A part with shape and dimensional specifications of sufficient precision will be obtained for perfect management/movement in line.

The figure shows a further characteristic of the bottle according to an embodiment of the invention. The folding lines X can advantageously have the shape of longitudinal cuts of a certain depth. This allows a label cutting blade to be introduced without the blade itself coming into contact with the packaging body at the time that the packaging is recycled.

To summarize, the system according to the invention, highly ecologically sustainable and economically competitive, is primarily based on regenerable\reusable containers designed for deposit, collection, washing and regeneration for the purpose of identical reuse.

The system makes it possible to manage reusable containers designed also for an optimal final subsequent recycling of the material or single-use containers designed for a significantly optimized recycling process of the material, which is cheaper and cleaner and is based on a selection and processing upstream of the package, at the time of deposit.

These containers are placed in a DRS system (Deposit Return System) that assumes the treatment only of specific/standardized packagings, bearing precise characteristics and appropriately configured templates.

It is stipulated that the various filling cycles of reusable containers should always be with the same contained product, in any case, allowing significant savings in the fact that targeted washing formulations can be applied and the problem of eliminating unwanted flavours is avoided, in the assurance of higher quality.

The first deposit system of the package used is characterised by mechatronic devices based on the pneumatic transport of the packagings in question, and they are suitably prepared for this type of operation, both in relation to weights, shapes and centre of gravity, and in relation to the prevention of damage from impacts or crushing.

The dimensional configuration of the packagings has been formulated in order to represent a unified reference particularly suitable for the manufacturing process in all its unique aspects as conceived (the main references are depth and width, which on a bottle containing 1 litre has been calculated to have a difference of at least 7 mm).

All the components of a package of this type, as well as numerous characteristic aspects of the system, correspond to elements specifically designed in a highly harmonized overview.

Each component of any type of package in question has been designed to be part of a process of separation, selection, recovery and enhancement of the material for recycling, both reusable and non-reusable components.

The system is based on the incentive to deposit through a credit system in favour of the consumer/depositor.

## Claims

1. System for the regeneration and/or advanced recycling of packagings of the type comprising a bottle-like elongated neck and a cap anchored to the neck of the packaging by means of a sealing ring held in place by a pair of longitudinally spaced annular projections, the system comprising a conveying unit for the packages to be treated towards a separation unit for separating the cap from the packaging and a collecting unit for the caps separated from the packaging, **characterized in that** the separation unit for the cap comprises at least one blade, preferably two opposing blades, for cutting the sealing ring, said blade(s) being configured to cut the sealing ring at a predefined position of the neck of the packaging, said predefined position being identified by oriented guide notches provided on the packagings to be treated on at least one of the two annular projections.

2. System according to Claim 1, **characterized in that** it further comprises guide elements for the orientation of the package to be treated so as to position the guide notches oriented at the blade(s).

3. System according to Claim 2, wherein the guide elements comprise centring means cooperating with one, preferably two, opposing longitudinal flattenings provided on a label element associated or associable with the package.

4. System according to one or more of the preceding claims, wherein a unit is provided for separating the labels from the packagings if said labels are of the non-regenerable type.

5. System according to one or more of the preceding claims, **characterized by** comprising one or more label processing units configured for applying opaque colour on the labels of the packagings to be regenerated, for printing new indications on the label of the regenerated package, for scraping off the print on the label so as to eliminate contamination from the label of the end-of-life packages to be recycled.

6. System according to one or more of the preceding claims, **characterized in that** it comprises a deposit/collection unit for the packagings to be treated, which collection unit comprises an input element provided with an opening for the insertion, by a user, of the packaging to be collected, sensors capable of reading the information present on the label of the package introduced into the opening so as to identify packagings compatible with the system, a duct adapted to transport the packagings from the input element to a collection container, pneumatic means adapted to push compatible packagings from the opening of the input element towards the collection container through the duct or expel the packagings if they are not recognised as compatible with the system.

7. System according to Claim 6, comprising a press device adapted to crush the packagings recognised as recyclable but not regenerable during transit from the input element to the collection container in order to facilitate and optimize its storage and transport to the conveying unit.

8. System according to Claim 6 or 7, wherein the collection unit comprises a control unit interfaced to the sensors and configured to identify the user who introduces the package into the opening by means such as barcode, QR code, pin, OTP, smartcard, smartphone or similar authentication systems so as to assign the user a credit whenever they place compatible package in the collection unit.

9. System according to one or more of the preceding Claims 6 to 8, wherein the duct of the collection unit has the configuration of a flexible tube of which the input element represents an extension provided with a lateral opening of such dimensions and shape as to contain a packaging compatible with the collection unit before its transit in the flexible tube, said flexible tube being visible for direct fixing to support structures of the collection unit.

10. System according to one or more of the preceding claims, wherein a packaging pre-selection unit is provided capable of recognising from the label the substance that was contained so as to group the packagings in such a way as to ensure that the regenerated packagings are always used with the same substances.

11. System according to one or more of the preceding claims, wherein a dynamic washing and palletizing unit is provided for the regenerated packagings.

12. Packaging for systems for the regenerating and/or advanced recycling of packagings according to one or more of the preceding claims, comprising a body having at one end a neck leading to a threaded opening mouth on which a cap is screwed or screwable, said cap being anchored to the neck of the packaging by means of a sealing ring held in place by a pair of longitudinally spaced annular projections provided with guide notches oriented for the positioning of one or more blades for separating the ring from the neck of the packaging when reusing/recycling the packaging.

13. Packaging according to claim 12, **characterized in** comprising a longitudinal notch on the neck between the two annular projections in correspondence with at least one of the oriented guide notches.

14. Packaging according to Claim 12 or 13, wherein the body is divided into a label part or zone and an exposed part or zone with the exposed part having structural characteristics different from the label part, in particular greater thicknesses than the thicknesses of the label part.

15. Packaging according to Claim 14, wherein the exposed part, when the packaging is in an upright position, is located in the upper part of the packaging below the neck while the label part or zone is located in the lower part of the packaging above the bottom of the packaging, the exposed part having the characteristic of having a greater bulge than the label part so as to confer a greater robustness to the exposed part than the label part.

16. Packaging according to Claim 14 or 15, **characterized in that** it comprises a label element superimposed on the label part or zone of the body of the packaging and having structural characteristics different from the label body or zone of the main container, in particular stiffer and therefore more robust and tough, so as to compensate for the lower and conventional rigidity and robustness of the label part or zone compared to the exposed part of the main packaging, i.e. of the actual container.

17. Packaging according to Claim 16, wherein the label element follows the shape of the lower part of the packaging so that it is fitted in a shirt-like manner on the body of the packaging starting from the bottom until an opening provided on the label element engages on a projection provided on the bottom of the package, which projection has a bead adapted to be melted or riveted when the label is applied in such a way as to prevent separation of the label element from the body of the packaging without removal of said projection or said bead of said projection, thereby highlighting the breakthrough.

18. Packaging according to Claim 16 or 17, wherein the label element comprises one, preferably two, opposing longitudinal flattenings acting as centring elements for the correct positioning of the packaging at the time of reuse/recycling of the packaging.

19. Packaging according to one or more of the preceding Claims 16 to 18, wherein the packaging body is made of PET while the label element and the cap are made of PP or PE.

20. Packaging according to one or more of the preceding Claims 16 to 19, wherein there are one, preferably two, longitudinal grooves adapted to receive a blade for cutting the label element without the blade coming into contact with the body of the packaging and to facilitate the operation of folding the packaging on itself when recycling the packaging.
